Europäisches Patentamt

European Patent Office

Office européen des brevets

(19)

(11) Veröffentlichungsnummer: **0 329 851**
**A2**

(12) EUROPÄISCHE PATENTANMELDUNG

(21) Anmeldenummer: 88121491.0

(22) Anmeldetag: 22.12.88

(51) Int. Cl.4: **C08G 77/60 , C04B 35/56**

(30) Priorität: 22.12.87 DE 3743595

(43) Veröffentlichungstag der Anmeldung:
30.08.89 Patentblatt 89/35

(84) Benannte Vertragsstaaten:
AT BE CH DE FR GB IT LI NL

(71) Anmelder: WACKER-CHEMIE GMBH
Prinzregentenstrasse 22
D-8000 München 22(DE)

(72) Erfinder: Rengstl, Alfred, Dr.
Zoglerberg 8
D-8261 Reischach(DE)

(54) Verfahren zur Verringerung des Halogengehaltes von Polycarbosilanen und Polysilanen.

(57) Die Erfindung betrifft ein Verfahren zur Verringerung des Halogengehalts von direkt an Siliciumatome gebundenes Halogen enthaltenden Polycarbosilanen und/oder Polysilanen, dadurch gekennzeichnet, daß die genannten Polysilane und/oder Polycarbosilane mit Verbindungen der allgemeinen Formel
$R_3SiOH$,
wobei R jeweils unabhängig voneinander Wasserstoff, Alkylrest mit 1 bis 10 Kohlenstoffatomen, Vinyl-, Allyl- oder Phenylrest bedeutet, in Kontakt gebracht werden.

EP 0 329 851 A2

## Verfahren zur Verringerung des Halogengehalts von halogenhaltigen Polycarbosilanen und Polysilanen

Die Erfindung betrifft ein Verfahren zur Verringerung des Halogengehalts von direkt an Siliciumatome gebundenem Halogen enthaltenden Polycarbosilanen und/oder Polysilanen.

Polysilane und Polycarbosilane sind wertvolle Zwischenprodukte zur Herstellung von Siliciumcarbid. Polysilane, beispielsweise, sind herstellbar aus Organochlordisilanen in Gegenwart von Tetraalkylphosphonium- oder Tetraalkylammoniumhalogeniden (US 4 298 558, GB 2 024 789). Aufgrund dieser Herstellungsweise enthalten die genannten Polymere erhebliche Mengen an an Siliciumatome gebundenem Chlor. Um die Freisetzung von halogenhaltigen Gasen bei der weiteren Verarbeitung der Polymere zu Siliciumcarbid zu verhindern, muß dieser Halogengehalt vermindert werden. R.H. Baney et al. (Organometallics 1983 (2), 859 -864) beschrieben die Reaktion von halogenhaltigen Polycarbosilanen und Polysilanen mit Grignard-Reagentien, Alkoholen, Lithiumalanat bzw. mit primären Aminen. R.H. Baney beschreibt auch die Reaktion von Polyhalosilanen mit Hexamethyldisiloxan in Gegenwart einer starken Säure und Toluol als Lösungsmittel (US 4 310 481, ausgegeben am 12. Januar 1982, Dow Corning Corporation).

Aufgabe der vorliegenden Erfindung war es, ein Verfahren zur Verminderung des Halogengehalts von halogenhaltigen Polysilanen und Polycarbosilanen zur Verfügung zu stellen, das apparativ einfach ist, wobei das verwendete Reagens preiswert und ohne größere Sicherheitsvorkehrungen handhabbar ist, sowie unerwünschte Produkte und überschüssiges Reagens sich nach der dem genannten Verfahren zugrundeliegenden Reaktion auf einfache Weise entfernen lassen. Diese Aufgabe wird durch die vorliegende Erfindung dadurch gelöst, daß die genannten Polysilane und/oder Polycarbosilane mit Verbindungen der allgemeinen Formel

$R_3 SiOH$,

wobei R jeweils unabhängig voneinander Wasserstoff, Alkylrest mit 1 bis 10 Kohlenstoffatomen, Vinyl-, Allyl- oder Phenylrest bedeutet, in Kontakt gebracht werden.

Die Herstellung der Verbindungen der allgemeinen Formel $R_3 SiOH$ erfolgt nach an sich bekannten Verfahren und ist beispielweise in der DE-AS 1951819 beschrieben.

Beispiele für Verbindungen der allgemeinen Formel $R_3 SiOH$ sind Trimethylsilanol, Triethylsilanol, Tripropylsilanol, Tributylsilanol, Triphenylsilanol, Dimethylvinylsilanol, Dimethylpropenylsilanol, Dimethylphenylsilanol und Diphenylmethylsilanol.

Bevorzugte erfindungsgemäß eingesetzte Verbindungen sind Trimethylsilanol und Dimethylvinylsilanol.

Direkt an Siliciumatome gebundenes Halogen enthaltende Polysilane sind z.B. aus der eingangs zitierten Literatur bekannt. Sie sind aus Einheiten der Formel

$R^1_n Si$     (I)

aufgebaut, wobei

$R^1$     gleiche oder verschiedene Halogen- und/oder Kohlenwasserstoffreste mit 1 bis 18 Kohlenstoffatomen, insbesondere das Chloratom und/oder der Methylrest;

n     eine ganze Zahl im Wert von 0, 1, 2 oder 3

bedeutet, und die Einheiten über Si-Si-Bindungen miteinander verknüpft sind.

Direkt an Siliciumatome gebundenes Halogen enthaltende Polycarbosilane sind ebenfalls bekannt; ihre Herstellung ist beispielsweise in W. Noll, Chemistry and Technology of Silicones, Academic Press, Orlando, 1968, Seite 356 - 364 beschrieben. Sie sind aus Einheiten der Formel

$(R^1_n Si-R^2_{3-n})$     (II)

l aufgebaut, wobei $R^1$ und n die oben für Formel (I) angegebenen Bedeutungen haben, und

$R^2$     zweiwertige Kohlenwasserstoffreste mit 1 bis 18 Kohlenstoffatomen sind, insbesondere Phenylenreste und Reste der Formel

$-(CH_2)_m-$, wobei m eine ganze Zahl von 1 bis 8 ist.

Solche Polycarbosilane sind u.a. durch die Reaktion von Dimethyldichlorsilan mit 1,6-Dichlorhexan zugänglich (ibid, S. 357).

Das erfindungsgemäße Verfahren läßt sich selbstverständlich auf alle Polymere anwenden, die direkt an Siliciumatome gebundenes Halogenatom enthalten. Solche lassen sich beispielsweise auch herstellen durch Pyrolyse von Alkylchlorsilanen bei 400 - 700 °C oder durch Überleiten von $HSiCl_3$, $SiCl_4$ oder $Si_2Cl_6$ über auf 1000 - 1300 °C erhitztes Silicium.

Unter dem eingangs und im Hauptanspruch erwähnten Begriff "Polysilane und/oder Polycarbosilane" sind auch solche Polymere zu verstehen, die in einem Molekül sowohl Einheiten der Formel (I) als auch solche der Formel (II) tragen. Desgleichen sind Mischungen von Polysilanen, Mischungen von Polycarbosilanen, sowie Mischungen von mindestens einem Polysilan mit mindestens einem Polycarbosilan unter

2

diesen Begriff zu zählen.

Die dem erfindungsgemäßen Verfahren zugrundeliegende chemische Reaktion läuft gemäß folgender Gleichung ab:

$$Polymer-X + R_3SiOH \rightarrow Polymer-OSiR_3 + HCl$$

worin

X    ein direkt an ein Siliciumatom gebundenes Halogenatom, vorzugsweise ein Chloratom, bedeutet.

Das erfindungsgemäße Verfahren wird vorzugsweise bei Temperaturen von 20 °C bis 300 °C, insbesondere von 50 °C bis 200 °C, durchgeführt.

Die oben genannte Reaktion kann beim Druck der umgebenden Atmosphäre, also 0,102 MPa (abs.) oder etwa 0,102 MPa (abs.), sie kann aber auch bei höheren oder niedrigeren Drücken durchgeführt werden. Drücke von 0,01 MPa bis 2 MPa (abs.) sind bevorzugt.

Die Reaktionszeit beträgt vorzugsweise 0,1 h bis 10 h, insbesondere 1 h bis 5 h.

Das erfindungsgemäße Verfahren kann unter Zusatz eines inerten Lösungsmittels durchgeführt werden. Beispiele für solche Lösungsmittel sind Aromaten und substituierte Aromaten, wie Benzol, Toluol; aliphatische Kohlenwasserstoffe und deren Gemische, wie n-Oktan, n-Decan, Oktan-Isomerengenisch, Petrolether verschiedener Siedebereiche und ähnliche mehr. Weitere Beispiele sind Ether wie Diethylether, Diisopropylether, Di-n-butylether, THF oder Dioxan.

Vorzugsweise wird das erfindungsgemäße Verfahren in Gegenwart einer Base, insbesondere in Gegenwart einer einen basischen Stickstoff enthaltenden Verbindung, durchgeführt.

Die Basen werden vorzugsweise im Überschuß oder in äquimolaren Mengen zu der dem zu entfernenden Chlor äquivalenten Menge eingesetzt.

Beispiele für einen basischen Stickstoff enthaltende Verbindungen sind primäre, sekundäre und tertiäre Amine, Harnstoff, Heterocyclen wie Pyridin, Pyrrol, Pyrrolidin, Imidazol, Chinolin, Chinazolin, Chinoxalin, s-Triazin, 1,2,4-Triazol.

Insbesondere finden Trimethylamin, Triäthylamin, Tri-n-butylamin, Pyridin, Picolin, Collidin, N,N-Dimethylanilin, N,N-Diethylanilin, 1,4-Diazabicyclo(2,2,2)octan und 1,8-Diazabicyclo(5,4,0)undec-7-en, Verwendung.

Die erfindungsgemäß hergestellten Polysilane und/oder Polycarbosilane werden nach an sich bekannten Verfahren zur Herstellung von SiC, wie SiC-enthaltendem Keramikmaterial, SiC-Fasern oder SiC-enthaltende Keramikschutzschichten verwendet. Eine Übersicht solcher Verfahren beschreibt R. West im Journal of Organometallic Chemistry 300, 327-346 (1986). Hierbei wird das erfindungsgemäß erhaltene Polysilan und/oder Polycarbosilan in inerter Atmosphäre oder im Vakuum bei Temperaturen von 700° bis 1300°C pyrolysiert.

Weiter finden die erfindungsgemäß hergestellten Polysilane und/oder Polycarbosilane Verwendung als Bindemittel beim Sintern von beispielsweise SiC, $Si_3N_4$, $B_4C$, BN, TiC, TiN.

Die nachfolgenden Beispiele wurden, sofern nicht anders angegeben, beim Druck von 0,10 MPa (abs.) durchgeführt. Die Temperatur betrug, falls nicht anders angegeben, 20 °C. Prozentzahlen beziehen sich auf das Gewicht des jeweiligen Polysilans bzw. Polycarbosilans.

Beispiel 1

200 g der bei der Rochow-Synthese der Methylchlorsilane als Nebenprodukt anfallenden Disilan-Fraktion wurden mit 4 g Tetrabutylammoniumbromid versetzt und innerhalb 5 Stunden bis auf eine Sumpftemperatur von 250 °C erhitzt, wobei flüchtige Methylchlorsilane abdestillierten. Nach dem Abkühlen erhielt man 37 g eines 35 Gew.-% Si-gebundenes Chlor enthaltenden Polysilan-Harzes. 30 g wurden anschließend in einem Gemisch aus 150 ml Toluol und 51 ml Pyridin gelöst und zum Rückfluß erhitzt. Innerhalb 30 min tropfte man 36 g (42,5 ml) Vinyldimethylsilanol zu, kochte noch 1 Stunde am Rückfluß und filtrierte schließlich den gebildeten Hydrochlorid-Niederschlag ab. Man erhielt beim Einengen des Filtrats 16,9 g eines spröden festen Polymers, welches teilweise in Toluol, THF, $CCl_4$, $CHCl_3$ löslich war. Der Chlorgehalt betrug 1,0%.

Beispiel 2

30 g eines 35 Gew.-% Si-gebundenes Chlor enthaltenden Polysilans, dessen organische Gruppen Methylgruppen sind, wurden in 130 ml Toluol und 40,5 ml Pyridin zum Rückfluß erhitzt. Anschließend wurden 39,5 ml Trimethylsilanol langsam zuge tropft. Man erhitzte noch 1 Stunde zum Rückfluß und filtrierte den gebildeten Hydrochloridniederschlag ab. Nach dem Entfernen des Lösungsmittels erhielt man 27 g eines festen, transparenten, goldgelben Polymers, welches bei 115 °C schmolz, in Toluol, Tetrahydrofuran, $CH_2Cl_2$, $CCl_4$ und $CHCl_3$ löslich war und einen Chlorgehalt von 1,8 % hatte.

Beispiel 3

30 g eines 35 Gew.-% Si-gebundenes Chlor enthaltenden Polysilans, dessen organische Gruppen Methylgruppen sind, wurden in 130 ml Toluol gelöst und mit 40 ml Pyridin versetzt. Unter Rückflußkochen tropfte man eine Lösung von 96,7 g Triphenylsilanol in 150 ml Toluol zu. Nach 1-stündigem Rückflußkochen filtrierte man ab und engte das Filtrat ein. Man erhielt 83 g eines gelben Feststoffes, welcher in Toluol, THF, $CCl_4$, $CHCl_3$, $CH_2Cl_2$ löslich war.

Chlorgehalt: < 0,5 %

Beispiel 4

25 g polymeres $(SiCl_2)x$, welches durch Pyrolyse von $HSiCl_3$ bei 1100 °C hergestellt wurde, wurde in 200 ml Toluol gelöst. Nach der Zugabe von 40 g (41 ml) Pyridin wurde das Gemisch zum Rückfluß erhitzt und innerhalb 1 Stunde wurden 45 g (56,2 ml) Trimethylsilanol zugetropft. Nach 2-stundigem Rückflußkochen wurde abfiltriert und das Filtrat eingeengt. Man erhielt 41 g eines gelben, löslichen Feststoffes, welcher einen Schmelzpunkt von 75 °C aufwies.

Chlorgehalt: 1,2 %

Beispiel 5

Eine Lösung von 25 g $H_2SCl_2$ in 250 Toluol wurde in Gegenwart von 2,5 mg Platindiacetylacetonat mit Acetylen bei 50 °C umgesetzt. Nach 5-stündigem Durchleiten von Acetylen wurde der Gasstrom gestoppt und es wurden 40 g (41 ml) Pyridin zugegeben. Während 30 min tropfte man 45 g (56,2 ml) Trimethylsilanol zu und erhitzte noch 2 Stunden zum Rückfluß. Dann wurde abfiltriert und das Filtrat eingeengt. Man erhielt 54 g einer öligen, teilweise mit Kristallen versetzten Substanz, welche in organischen Lösungsmitteln löslich war und einen Chlorgehalt von 2,1 % aufwies.

Beispiel 6

Die in Beispiel 1 - 5 erhaltenen Polymere wurden in strömendem Argon innerhalb 1 Stunde bei 1000 °C zu SiC pyrolisiert. In nachfolgender Tabelle sind die jeweiligen keramischen Ausbeuten angegeben.

Tabelle

| Beispiel | 1 | 2 | 3 | 4 | 5 |
|---|---|---|---|---|---|
| keram. Ausbeute in % | 75 | 33 | 15 | 28 | 14 |

**Ansprüche**

1. Verfahren zur Verringerung des Halogengehalts von direkt an Siliciumatome gebundenes Halogen enthaltenden Polycarbosilanen und/oder Polysilanen, dadurch gekennzeichnet, daß die genannten Polysilane und/oder Polycarbosilane mit Verbindungen der allgemeinen Formel

R$_3$SiOH

wobei R jeweils unabhängig voneinander Wasserstoff, Alkylrest mit 1 bis 10 Kohlenstoffatomen, Vinyl-, Allyl-, oder Phenylrest bedeutet, in Kontakt gebracht werden.

2. Verfahren nach Anspruch 1, dadurch gekennzeichnet, daß es bei einer Temperatur von 20 °C bis 300 °C durchgeführt wird.

3. Verfahren nach Anspruch 1 oder 2, dadurch gekennzeichnet, daß es in Gegenwart einer Base durchgeführt wird.

4. Verfahren nach einem oder mehreren der Ansprüche 1 bis 3, dadurch gekennzeichnet, daß es in Gegenwart einer einen basischen Stickstoff enthaltenden Verbindung durchgeführt wird.

5. Verwendung von Polysilanen und/oder Polycarbosilanen hergestellt nach einem oder mehreren der Ansprüche 1 bis 4 zur Herstellung von Siliciumcarbid.

6. Verwendung von Polysilanen und/oder Polycarbosilanen hergestellt nach einem oder mehreren der Ansprüche 1 bis 4 zur Herstellung von SiC-enthaltendem Keramikmaterial.

7. Verwendung von Polysilanen und/oder Polycarbosilanen hergestellt nach einem oder mehreren der Ansprüche 1 bis 4 zur Herstellung von SiC-enthaltenden Fasern.

8. Verwendung von Polysilanen und/oder Polycarbosilanen hergestellt nach einem oder mehreren der Ansprüche 1 bis 4 zur Herstellung von SiC-enthaltenden Keramikschutzschichten.

9. Verwendung von Polysilanen und/oder Polycarbosilanen hergestellt nach einem oder mehreren der Ansprüche 1 bis 4 als Bindemittel beim Sintern.